Europäisches Patentamt

European Patent Office

Office européen des brevets

(11) Veröffentlichungsnummer: **0 310 794**
**A1**

(12) ## EUROPÄISCHE PATENTANMELDUNG

(21) Anmeldenummer: **88113475.3**

(22) Anmeldetag: **19.08.88**

(51) Int. Cl.4: **H01M 10/50 , H01M 4/74**

(30) Priorität: **06.10.87 DE 3733734**

(43) Veröffentlichungstag der Anmeldung:
**12.04.89 Patentblatt 89/15**

(84) Benannte Vertragsstaaten:
**AT BE DE FR GB IT SE**

(71) Anmelder: **VARTA Batterie Aktiengesellschaft**
**Am Leineufer 51**
**D-3000 Hannover 21(DE)**

(72) Erfinder: **Richter, Gerolf, Dr. Dr.-Ing.**
**Berliner Strasse 114**
**D-5800 Hagen 7(DE)**

(74) Vertreter: **Kaiser, Dieter Ralf, Dipl.-Ing.**
**Gundelhardtstrasse 72**
**D-6233 Kelkheim/Ts.(DE)**

(54) **Elektrischer Akkumulator.**

(57) Zur wirksamen Abführung der Stromwärme aus dem Innern von Bleiakkumulatoren hoher Leistungsdichte, insbesondere solchen mit festgelegtem Elektrolyten, besitzen die am Aufbau der Elektrodensätze beteiligten negativen Gitterplatten anstelle des üblichen Gitterrahmens ein U-förmig um das Gitter herumlaufendes und an diesem befestigtes Rohr, durch das eine Kühlflüssigkeit strömt. Besonders vorteilhaft wegen ihres Wärmeleitvermögens ist die Verbindung zwischen einem verbleiten Kupferstreckmetall-Gitter (2) und einem Kupferrohr (3), wobei ein dem Streckgitter anhaftender Reststreifen (8) aus ungestrecktem Kupferblech das fehlende Oberteil des Rahmens ersetzt und den Fahnenableiter (9) trägt.

Fig.1

EP 0 310 794 A1

## Elektrischer Akkumulator

Die Erfindung betrifft einen elektrischen Akkumulator, insbesondere Bleiakkumulator, mit einem Zellengefäß, welches den Elektrolyten und einen aus positiven und negativen Elektroden mit zwischenliegenden Separatoren gebildeten Plattenblock sowie Kühlrohre enthält, die an eine Kühlvorrichtung anschließbar sind.

Die Ladung eines Bleiakkumulators ist in der Regel mit einem beträchtlichen Temperaturanstieg verbunden. Seine Erwärmung resultiert zum einen aus der Ladereaktion an sich, die exotherm ist, zum anderen - und dies im überwiegenden Maße - aus der Joule'schen Verlustwärme, die durch den aufgewendeten, für den elektrochemischen Umsatz aber nur zum Teil ausgenutzten Ladestrom aufgebracht wird. Bei gasdichten Bleibatterien kommt hinzu, daß der in der Endphase der Ladung und bei Überladung an den negativen Elektroden stattfindende Sauerstoffverzehr ebenfalls ein exothermer Vorgang ist. So werden insbesondere bei Akkumulatoren hoher Leistungsdichte, d.h. solchen, die nicht nur mit hohe Strömen entladen, sondern auch innerhalb weniger Stunden durch Schnelladen aus dem Zustand völliger Kapazitätserschöpfung wieder in den vollgeladenen Zustand gebracht werden können, leicht schädliche Temperaturen erreicht. Besonders betroffen sind dabei solche Zellen, die über keine frei bewegliche Elektrolytflüssigkeit verfügen, welche durch Konvektion zu einer gewissen Wärmeabfuhr aus den Plattenblöcken beitragen kann.

In konventionellen Akkumulatorenzellen der offenen Bauart, z.B. Großzellen für den Fahrzeugantrieb, ist es im allgemeinen ausreichend, zur Kühlung nur die Polbrücken mit Wasser durchströmen zu lassen oder gemäß DE-AS 24 14 758 Kühlmittelleitungen aus korrosionsfestem Kunststoff in der Zelle so anzuordnen, daß sie ständig in den Elektrolyten eintauchen.

Eine aus der DE-OS 26 57 183 bekannte Vorrichtung aus zwei über Verbindungsrohre kommunizierenden Kammern ist zum wesentlichen Teil im Gasraum der Zelle angeordnet und erlaubt dadurch eine Temperierung sowohl der im flüssigen wie im dampf- und gasförmigen Aggregatzustand befindlichen Elektrolytanteile, wobei der Kühlmitteldurchfluß durch das in der Höhe gestaffelte Rohrsystem durch eine Ventilsteuerung an den aktuellen Bedarf angepaßt werden kann.

Die vorliegende Erfindung ist insbesondere bei allen Arten von Industriebatterien hoher Leistungsdichte anwendbar sein, soweit sie mit negativen Gitterplatten bestückt sind und in ihrer großen Mehrzahl wartungsarm oder sogar wartungsfrei arbeiten. Diese Betriebsweise wird durch eine nur knapp bemessene Elektrolytmenge, die in den Poren des aktiven Materials und dem Scheider aufgesaugt oder durch Gelbildung zwischen den Elektroden festgelegt ist, sowie durch das Vorhandensein einer negativen Überschußkapazität, die sogenannte Ladereserve, ermöglicht.

Mit diesen Vorgaben liegt der Erfindung die Aufgabe zugrunde, einen Akkumulator der eingangs genannten Gattung mit hoher Leistungsdichte verfügbar zu machen, der auch bei kontinuierlicher Zyklenbelastung keine unzulässig hohen Betriebstemperaturen erreicht und vor dadurch bedingen Wasserverlusten geschützt ist.

Die Aufgabe wird erfindungsgemäß durch die im kennzeichnenden Teil des Anspruchs 1 angegebene Maßnahme gelöst. Bevorzugte Ausführungsformen eines erfindungsgemäßen Akkumulators sind in den Unteransprüchen angegeben.

Ein erfindungsgemäß um das Plattengitter, insbesondere der negativen Elektrode U-förmig herumgeführtes Rohr aus gut wärmeleitendem Material, welches den Gitterrahmen an den entsprechenden Seiten des Gitters ersetzt und von einem Kühlmittel durchströmt wird, ist zur Wärmeabfuhr aus der Zelle außerordentlich vorteilhaft. Die verhältnismäßig große Gitterfläche jeder negativen Elektrode ist mit dem Rohr gut leitend verbunden, so daß die entwickelte Wärme auf dem schnellsten Wege aus dem Innern des Plattensatzes an das jeweilige Kühlrohr transportiert wird.

Die Dicke des Kühlrohres in Richtung der Plattennormalen soll erfindungsgemäß dem Dickenauftrag der aktiven Masse auf das Gitter, durch Pastieren oder Pressen, möglichst angepaßt sein. Die Stapelfähigkeit der negativen Platte zusammen mit beliebigen positiven Platten und Separatoren bleibt dadurch gewährleistet. Dabei sind auch andere als kreisförmige Rohrquerschnitte, z.B. quadratische oder rechteckige, im Rahmen der Erfindung möglich.

In einer besonders vorteilhaften Ausführungsform der Erfindung ist das Kühlrohr, welches insbesondere das negative Elektrodengitter U-förmig umrandet, wegen des guten Wärmeleitverhaltens ein Kupferrohr, und das Gitter selbst ein Kupferstreckmetall. Die Befestigung des Rohres geschieht zweckmäßig durch Umkrimpen des in den Randzonen flachgedrückten Streckmetallgitters und kann als vollautomatisierbarer Arbeitsschritt in den Fertigungsprozeß eingehen. Das Streckmetallgitter ist damit quasi von den beiden aufsteigenden Schenkeln und dem waagerecht verlaufenden Mittelabschnitt des U-förmig gewinkelten Kühlrohres aufgespannt.

Da Kupfergitter von negativen Bleielektroden während des Curing-Prozesses der Gefahr eines Kupfer-Abtrags unterliegen und bei der Formation umpolen können, werden sie üblicherweise verbleit. Diese Schutzmaßnahme ist auch bei der erfindungsgemäßen Gitteranordnung vorgesehen. Die Verbleiung wirkt sich hier jedoch noch besonders günstig dadurch aus, daß neben der Haftung der Aktivmasse am Gitter der mechanische und elektrische Kontakt zwischen Gitter und Kühlrohr wesentlich verbessert werden.

Das dem mittleren Rohrabschnitt gegenüberliegende Gitterende wird vorzugsweise durch einen Reststreifen aus ungestrecktem Gittermaterial gebildet, welcher sich zwischen den Rohrschenkeln erstreckt und ebenfalls durch Umkrimpen oder Bördeln mit diesen fest verbunden ist. Der nur entlang dreier Gitterseiten als Kühlrohr umlaufende Gitterrahmen wird damit durch ein gittereigenes Teil, welches den fehlenden oberen Rahmenabschnitt bildet, geschlossen. Aus dem Reststreifen des ungestreckten Gittermaterials ist zweckmäßig ein Fahnenableiter ausgeformt.

Anhand der Figuren wird die Erfindung im folgenden verdeutlicht.

Figur 1 zeigt eine negative Gitterplatte gemäß der Erfindung.

Figur 2 zeigt einen Querschnitt durch die Gitterplatte gemäß Figur 1.

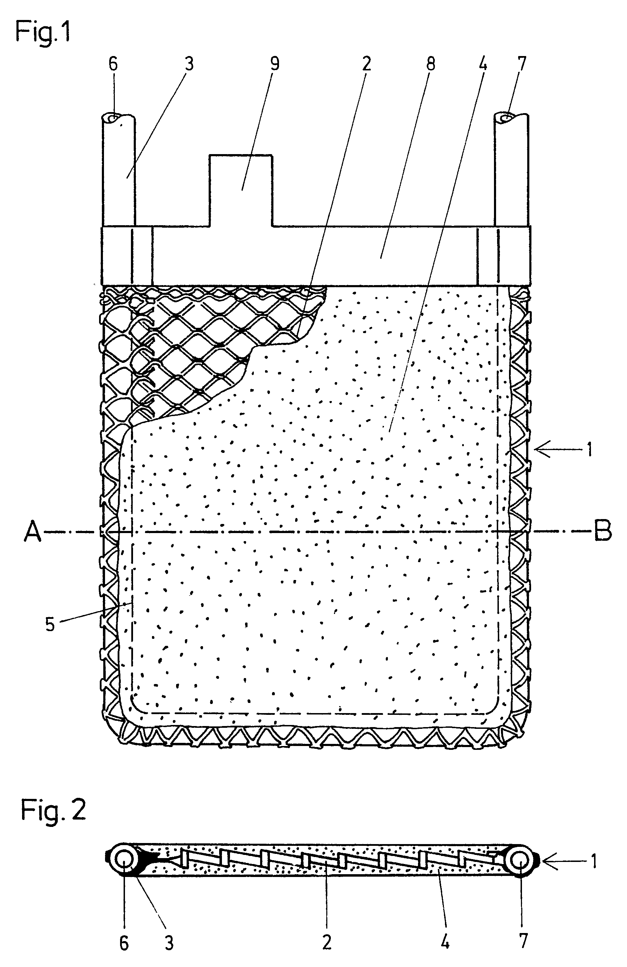

Nach Figur 1 liegt der Gitterplatte 1 in ihrer bevorzugten Ausführungsform ein Kupferstreckmetallgitter 2 zugrunde, welches an drei Seiten von dem U-förmig gebogenen Rohr 3 aus Kupfer durch Umkrimpen der entsprechenden Randzonen, die dabei flachgedrückt werden, aufgespannt ist. Der von dem aufge pasteten Aktivmaterial 4 verdeckte innere Umriß des Rohres ist durch die gestrichelte Linie 5 angedeutet. Eine Rohr und Gitter gemeinsam überziehende dünne Bleischicht ist in der Figur nicht dargestellt.

Die offenen Rohrenden 6, 7 bilden den Einlauf bzw. Auslauf für eine Kühlflüssigkeit.

Ein Reststreifen 8 aus ungestrecktem Kupferblech und damit integraler Bestandteil des Streckgitters ist ebenfalls durch Umkrimpen oder Umbördeln seiner Enden an dem Kühlrohr befestigt. Er bildet zwischen den beiden Rohrschenkeln ein Joch und zugleich ein abschließendes oberes Rahmenteil, welches auch die Stromleitfahne 9 trägt.

In Figur 2 ist ein Querschnitt der erfindungsgemäßen Gitterplatte entlang der Spur A - B in Figur 1 dargestellt. Die Bezugszeichen entsprechen denen der Figur 1.

## Ansprüche

1. Elektrischer Akkumulator, insbesondere Bleiakkumulator, mit einem Zellengefäß, welches den Elektrolyten und einen aus positiven und negativen Elektroden mit zwischenliegenden Separatoren gebildeten Plattenblock sowie Kühlrohre enthält, die an eine Kühlvorrichtung anschließbar sind, dadurch gekennzeichnet, daß zumindest ein Teil der Elektrodenplatten mit einem an ihren unteren und seitlichen Rändern angeordneten Rahmen versehen sind, welcher als Rohr aus einem wärmeleitfähigen Material ausgebildet ist, das an eine Kühlmittelleitung angeschlossen ist.

2. Elektrischer Akkumulator nach Anspruch 1, dadurch gekennzeichnet, daß der Elektrolyt immobilisiert, insbesondere ein durch Gelbildung festgelegter Schwefelsäureelektrolyt ist.

3. Elektrischer Akkumulator nach den Ansprüchen 1 und 2, dadurch gekennzeichnet, daß die negativen Elektroden Gitterplatten mit einem Gitter (2) aus Kupfer-Streckmetall sind, welches mit seinen unteren und seitlichen Rändern durch ein U-förmiges, um das Gitter herumlaufendes Kupferrohr (3) aufgespannt und zusammen mit diesem verbleit ist.

4. Elektrischer Akkumulator nach Anspruch 3, dadurch gekennzeichnet, daß ein Reststreifen (8) aus ungestrecktem Gittermaterial das obere Rahmenteil zwischen den Rohrschenkeln bildet.

5. Elektrischer Akkumulator nach Anspruch 4, dadurch gekennzeichnet, daß aus dem Reststreifen ein Fahnenableiter (9) ausgeformt ist.

Fig.1

Fig. 2

## EINSCHLÄGIGE DOKUMENTE

EP 88113475.3

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | <u>DE - A1 - 2 657 183</u> (VARTA) <br> * Anspruch 1; Fig. 5 * <br> -- | 1 | H 01 M 10/50 <br> H 01 M 4/74 |
| A | <u>DE - A1 - 2 635 427</u> (VARTA) <br> * Anspruch 1; Fig. 1 * <br> -- | 1 | |
| A | <u>GB - A - 1 397 235</u> (ELTRA) <br> * Fig. 1,2 * <br> -- | 1. | |
| A | <u>DE - A1 - 3 312 550</u> (HAGEN) <br> * Zusammenfassung; Fig. 1 * <br> -- | 3,5 | |
| A | <u>GB - A - 2 072 930</u> (BENDER) <br> * Fig. 1 * <br> ---- | 4,5 | |

RECHERCHIERTE
SACHGEBIETE (Int. Cl.4)

.H 01 M

Der vorliegende Recherchenbericht wurde für alle Patentansprüche erstellt.

| Recherchenort <br> WIEN | Abschlußdatum der Recherche <br> 09-01-1989 | Prüfer <br> LUX |
|---|---|---|